# EUROPEAN PATENT SPECIFICATION

(11) **EP 4 132 295 B1**
(45) Date of publication and mention of the grant of the patent: **02.07.2025**
(21) Application number: 22724109.8
(22) Date of filing: 25.04.2022
(51) Int. Cl.: A23L 7/117, A23J 3/22

(54) **FISH ANALOGUE**
FISCHANALOG
SUCCÉDANÉ DE POISSON

(30) Priority: 26.04.2021 GB 202105928
(43) Date of publication of application: 15.02.2023
(73) Proprietor: Nomad Foods Europe Limited, Woking GU21 6HT (GB)
(72) Inventor: PITTORDOU, Christopher, London Middlesex TW14 8HA (GB); CALVER, Stephanie, London Middlesex TW14 8HA (GB); METTEN-HELBICH, Dieter, London Middlesex TW14 8HA (GB)
(74) Representative: Haseltine Lake Kempner LLP
(86) International application number: PCT/EP2022/060917
(87) International publication number: WO 2022/229110

(56) References cited:
- WO-A1-2021/009657
- CA-A1- 3 116 466
- CA-A1- 3 127 550
- US-A1- 2017 258 109
- US-A1- 2019 269 150
- PETRACCI MASSIMILIANO ET AL: "Functional ingredients for poultry meat products", TRENDS IN FOOD SCIENCE & TECHNOLOGY, vol. 33, no. 1, 2013, pages 27 - 39, XP028709807, ISSN: 0924-2244, DOI: 10.1016/J.TIFS.2013.06.004
- DATABASE GNPD [online] MINTEL; 29 March 2021 (2021-03-29), ANONYMOUS: "Soy and Wheat Crispy Nuggets", XP093131139, retrieved from https://www.gnpd.com/sinatra/recordpage/8597013/ Database accession no. 8597013
- KYRIAKOPOULOU KONSTANTINA ET AL: "Functionality of Ingredients and Additives in Plant-Based Meat Analogues", FOODS, vol. 10, no. 3, 1 March 2021 (2021-03-01), CH, pages 600, XP055940246, ISSN: 2304-8158, DOI: 10.3390/foods10030600
- SANCHEZ-ALONSO ET AL: "Wheat fiber as a functional ingredient in restructured fish products", FOOD CHEMISTRY, ELSEVIER LTD, NL, vol. 100, no. 3, 1 January 2007 (2007-01-01), pages 1037 - 1043, XP005559269, ISSN: 0308-8146, DOI: 10.1016/J.FOODCHEM.2005.09.090
- DATABASE GNPD [online] MINTEL; 28 April 2021 (2021-04-28), ANONYMOUS: "Vegan Fried Fish", XP055946029, retrieved from https://www.gnpd.com/sinatra/recordpage/8654573/ Database accession no. 8654573
- DATABASE GNPD [online] MINTEL; April 2021 (2021-04-01), ANONYMOUS: "Vegan Fried Fish", XP055946029, retrieved from https://www.gnpd.com/sinatra/recordpage/8654573/ Database accession no. 8654573
- VAN KAMPEN DANIELLE: "Visvervanger getest: AH Vegan Kibbeling", DEHIPPEVEGETARIER.NL, 25 March 2021 (2021-03-25), pages 1 - 2, XP055946031, Retrieved from the Internet <URL:https://www.dehippevegetarier.nl/vleesvervangers/visvervanger-getest-ah-vegan-kibbeling/> [retrieved on 20220725]
- KYRIAKOPOULOU KONSTANTINA ET AL: "Functionality of Ingredients and Additives in Plant-Based Meat Analogues", FOODS, vol. 10, no. 3, 12 March 2021 (2021-03-12), CH, pages 600, XP055940246, ISSN: 2304-8158, DOI: 10.3390/foods10030600

## Description

### Background

Growing numbers of people are choosing to eat a vegetarian or vegan diet. This is because plant-based products are often considered to be more environmentally friendly and sustainable compared to meat or fish products. There are also proposed health benefits associated with eating a plant-based diet, as well as the potential positive impact on the climate and on animal welfare.

Currently available plant-based foods often do not provide adequate nutrition for those wishing to fully or partially remove animal or fish products from their diet. Many do not contain a comparable macronutrient profile to meat or fish, such as protein; which plays a vital role in the development and maintenance of human muscle tissue.

Currently available vegetarian foods often use egg albumin or egg white in order to bind the plant material and other components together, however, these products are not suitable for a vegan diet. As a vegan alternative to egg albumin, currently available plant-based foods instead may use methylcellulose or other chemically modified cellulose products to bind the products together. However, consumers are increasingly concerned with their consumption of artificial additives and wish to instead consume a "label-friendly" food product that has reduced or is substantially free from artificial additives. Furthermore, methyl cellulose and other chemically modified cellulose products are known to have an unpleasant laxative effect. It was therefore an aim of the present inventors to develop a fish or meat analogue that is free of egg albumin or chemically modified cellulose binders, while still having good cohesion.

In addition, existing meat or fish substitute products also do not adequately resemble meat or fish products, and are therefore unappealing to consumers. For example, there are no fish substitute products that are suitable for vegetarians and vegans which have a texture and colour suitably replicating that of white fish. Often the succulence is also incomparable.

Known vegan products can be found in the database GNPD MINTEL, record ID 8654573 (XP055946031) or record ID 8597013 (XP093131139).

There is therefore a need to provide a meat or fish analogue which is suitable for vegetarians and vegans that still adequately binds the components of the meat or fish analogue together. There is also a need to provide a meat or fish analogue that has an improved nutritional profile compared to known meat or fish analogues. Finally, there is a need to provide a meat or fish analogue that closely mimics the appearance and/or texture of meat or fish.

### Summary of the invention

The present invention solves this problem by providing a fish analogue according to the appended claims.

The present invention, or embodiments thereof, may have one or more of the following advantages over and above the prior art.
- The fish analogue of the present invention comprises wheat gluten in combination with plant fibre. These components are found to effectively bind the components of the fish analogue together, such that the fish analogue has a cohesive texture;
- The fish analogue of the present invention is free of animal and dairy products and is therefore suitable for consumers with a vegan or vegetarian diet;
- The fish analogue of the present invention is free of soy protein, which can cause an allergic reaction. This is advantageous due to the link between farming of soy protein and deforestation.
- The fish analogue of the present invention can have a good nutritional profile, with a source of protein claim. In particular, wheat gluten provides a good source of protein. The fish analogue may therefore have an improved protein content as compared to other known fish or meat analogues.
- The fish analogue of the present invention can be free of chemically modified cellulose-derived products or modified starches, thereby providing a label-friendly product.
- The fish analogue of the present invention is suitable for chilling or freezing.
- The fish analogue of the present invention can be free of mycoprotein or fungus-derived proteins, soy protein or nuts, which may otherwise cause an allergic reaction.
- The fish analogue of the present invention may provide a source of omega-3 fatty acids, to more closely emulate the nutritional benefits obtained from eating white fish.
- The fish analogue of the present invention may have an appearance that mimics fish. This is aided by the use of wheat gluten, and optionally wheat fibre, which is pale in colour.
- The fish analogue of the present invention may have good textural properties, for example, a texture that closely resemble fish.
- The fish analogue of the present invention may be free of palm oil thereby providing a healthier product that is low in saturated fats.

In a second aspect, there is provided a method of producing a fish analogue according to the appended claims.

In a third aspect, there is provided the use of wheat gluten and plant fibre to bind plant material in a fish analogue according to the appended claims.

Also described herein is a food product comprising the fish analogue. The food product may comprise the fish analogue and a coating, wherein the coating is selected from a coating comprising a batter layer or a coating comprising a crumb layer.

### Brief Description of Figures

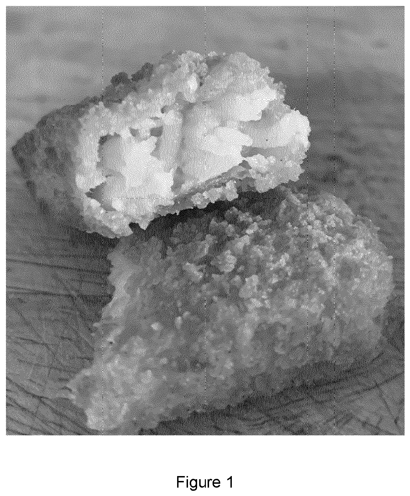

Figure 1 is a photograph showing an example food product comprising an example fish analogue of the present invention.

### Detailed Description

The presently-disclosed subject matter is illustrated by specific but non-limiting embodiments or examples throughout this description. Each example is provided by way of explanation of the present disclosure and is not a limitation thereon.

All combinations of method or process steps as used herein can be performed in any order, unless otherwise specified or clearly implied to the contrary by the context in which the referenced combination is made.

While the following terms used herein are believed to be well understood by one of ordinary skill in the art, definitions are set forth to facilitate explanation of the presently-disclosed subject matter.

Unless defined otherwise, all technical and scientific terms used herein have the same meaning as commonly understood by one of ordinary skill in the art to which the presently-disclosed subject matter belongs.

Following long-standing patent law convention, the terms "a", "an", and "the" refer to "one or more" when used in this application, including the claims.

As used herein, the term "about," when referring to a value or to an amount of mass, weight, time, volume, concentration or percentage is meant to encompass variations of in some embodiments ±20%, in some embodiments ±15%, in some embodiments ±10%, in some embodiments ±5%, in some embodiments ±1%, in some embodiments ±0.5%, and in some embodiments ±0.1% from the specified amount, as such variations are appropriate to perform the disclosed invention(s).

All lists of items, such as, for example, lists of ingredients, are intended to and should be interpreted as Markush groups. Thus, all lists can be read and interpreted as items "selected from the group consisting of' ... list of items ... "and combinations and mixtures thereof."

As used herein, the term "comprises" or "comprising" has an open meaning, which allows other, unspecified features to be present. This term embraces, but is not limited to, the semi-closed term "consisting essentially of" and the closed term "consisting of". Unless the context indicates otherwise, the term "comprises" may be replaced with either "consisting essentially of" or "consists of".

The features of any dependent claim may be readily combined with the features of any of the independent claims or other dependent claims. The features of any embodiment may also be readily combined with the features of any other embodiment, unless explicitly referred to otherwise.

All percentages in the present disclosure are listed as percent by weight on the total weight of the meat or fish analogue, unless explicitly noted otherwise.

"Meat analogue" referred to herein refers to a meatless substance that is designed to resemble meat. Meat analogue may otherwise be referred to as a vegetarian meat product, a vegan meat product, a meat substitute, a meat extender, mock meat or imitation meat. Meat analogue described herein refers to the "core" of the food product, i.e., an uncoated food product. "Fish analogue" referred to herein refers to a fishless substance that is designed to resemble fish. Fish analogue may otherwise be referred to as a vegetarian fish product, a vegan fish product, a fish substitute, a fish extender, mock fish or imitation fish. Fish analogue described herein refers to the "core" of the food product, i.e., an uncoated food product.

"Plant-based" or "plant" referred to herein indicates that the product or component derives from plant and comprises no animal-derived product, for example, no meat or dairy product.

### Wheat Gluten

Wheat gluten is selected for the fish analogue of the present invention because it has a number of important properties. Wheat gluten is capable of forming a protein network or a protein structure matrix. It is understood that this network/matrix is highly beneficial for the final texture and cohesion of the meat or fish analogue. Wheat gluten hydrates in water and has a high water binding capacity (200-400%). The presence of water bound with the wheat gluten can assist with the moist succulent texture of the fish analogue. Additionally and importantly, the present inventors found that wheat gluten could be used in place of a binder in order to effectively bind all components of the fish analogue together. This leads to a fish analogue with a cohesive and succulent mouthfeel. As a result, the use of wheat gluten may negate the need for other binders typically used in fish analogues, such as egg albumin or chemically modified cellulose-derived binders. Furthermore, wheat gluten is found to have emulsifying properties.

Wheat gluten also has a high protein content at about 60 - 95% of the wheat gluten. This is important to help increase the protein content of the fish analogue. Vegetarian and vegan diets benefit from having meat or fish substitute products that can provide suitable sources of protein. Wheat gluten is pale in appearance which may be important in order to mimic the appearance of some meat or fish products, e.g., white fish. Alternative plant-based protein sources are found not to have the required pale colour appearance.

In some embodiments, the wheat gluten is powdered wheat gluten. The powdered wheat gluten may be a fine powder, that is, wherein 99% of the particles have a particle size of less than 0.25 mm as determined by sieving. The fine powder may assist in the preparation methods to produce the fish analogue.

Wheat gluten can be obtained from commercial sources, for example, Crespel and Deiters Group (https://crespeldeitersgroup.com/).

The wheat gluten has a number of functions. It serves as a binder for the fish analogue. It provides texture to the fish analogue. The wheat gluten also provides protein fortification.

Wheat gluten is present in the fish analogue at about 7-20% by weight of the fish analogue, optionally about 8-18 %, optionally about 9-15%, optionally about 9-12% and in some embodiments is present at about 10% by weight of the fish analogue. In an embodiment, the wheat gluten is present in an amount greater than about 7%, or greater than about 8%, or greater than about 9%, or greater than or equal to about 10% by weight of the fish analogue. Lower amounts of wheat gluten (< 7 %) do not provide an adequate source of protein, while higher amounts of wheat gluten (> 20%) were found to have a detrimental effect on texture.

### Plant Fibre

The fish analogue additionally comprises plant fibre, the plant fibre has a fibre length (i.e. the longest dimension of the fibre) between about 80 microns to about 500 microns. Plant fibre defined herein refers to any fibre that is plant-derived, i.e., a fibre that is not derived from an animal or dairy product. The presence of plant fibre helps to bind the ingredients together, in combination with the wheat gluten. This range of fibre length, in particular, is found to have good oil and water binding capacity, and helps bind together components of the meat or fish analogue, while maintaining good textural properties. The present inventors found that smaller fibre lengths have reduced water and oil binding capacity, while longer fibre lengths can have a detrimental effect on texture.

The fibre length may be determined by optical microscopy at 400 x to 1000 x magnification.

In some embodiments, the plant fibre has a fibre length that is from about 150 microns to about 250 microns, or about 200 microns. In some embodiments, the plant fibre has a fibre length that is greater than 80 microns, or greater than 100 microns, or greater than 120 microns, or greater than 140 microns, or greater than 150 microns, or greater than 160 microns, or greater than 170 microns, or greater than 180 microns. In some embodiments, the plant fibre has a fibre length that is less than 500 microns, or less than 450 microns, or less than 400 microns, or less than 350 microns, or less than 300 microns, or less than 275 microns, or less than 250 microns, or less than 225 microns.

Wheat fibre can be obtained from commercial sources, for example, J. Rettenmaier & Söhne (https://www.jrs.eu/jrs_en) The plant fibre in the fish analogue is a cereal or bamboo fibre. In some embodiments, the cereal fibre may be selected from oat fibre or wheat fibre. Cereal fibres and/or bamboo fibres are preferred over fruit or vegetable fibres or other fibres since they (i) have good oil and water binding properties, (ii) may be paler in colour, (iii) may be free of pectin, which may otherwise affect the texture of the fish analogue, and (iv) may provide a fish analogue that has improved texture as compared to other vegetable fibres. The use of potato fibre, for example, may lead to a fish analogue with a softer and more undesirable texture. In preferred embodiments, the plant fibre is wheat fibre.

The presence of plant fibre may help to bind the ingredients together, and acts as an emulsifier, which is effective in combination with the wheat gluten. The plant fibre and therefore effectively binds water and/or a plant-based oil. In addition, the presence of plant fibre may further provide nutritional benefit to the consumer. Cereal and bamboo fibre have a high water binding capacity and oil binding capacity, with wheat fibre in particular demonstrating a water binding capacity of 400-1250% and an oil binding capacity of 300-1100%.

The fish analogue comprises from about 0.25 to about 7.5 % plant fibre by weight of the fish analogue, or from about 0.3 to about 5% plant fibre. In some embodiments, the fish analogue, comprises from about 0.3 to about 3 % plant fibre, or from about 0.35 to about 1.25 % plant fibre, or about 0.5 to about 1 %, or about 0.75 % plant fibre by weight of the fish analogue. In preferred embodiments, the plant fibre is wheat fibre. Too little plant fibre (< 0.25 %) has reduced water and oil binding capacity, while too much fibre can lead to a product that is too firm in texture.

In some embodiments, the fish analogue comprises greater than about 0.25% plant fibre by weight of the meat or fish analogue, or greater than about 0.5% plant fibre, or greater than about 0.7% plant fibre by weight of the fish analogue. In some embodiments, the fish analogue comprises less than about 7.5% plant fibre by weight of the fish analogue, or less than 6% plant fibre, or less than 5% plant fibre, or less than about 4% plant fibre, or less than about 3% plant fibre, or less than about 2% plant fibre, or less than about 1% plant fibre by weight of the fish analogue. In a preferred embodiment the plant fibre is wheat fibre.

The plant fibre preferably comprises insoluble fibres. In some embodiments, the plant fibre comprises at least about 96 % insoluble fibres by weight of the plant fibre.

In some embodiments, the ratio of wheat gluten to plant fibre in the fish analogue is from about 1:1 to about 30:1, optionally from about 7:1 to about 25:1, optionally from about 10:1 to about 15:1, or about 13:1. In some embodiments, the ratio of wheat gluten to plant fibre in the fish analogue is greater than about 1:1, or greater than about 2:1, or greater than about 3:1, or greater than about 4:1, or greater than about 5:1, or greater than about 6:1, or greater than about 7:1, or greater than about 8:1, or greater than about 9:1, or greater than about 10:1, or greater than about 11:1, or greater than about 12:1. In some embodiments, the ratio of wheat gluten to plant fibre in the fish analogue is less than about 20:1, or less than about 19:1, or less than about 18:1, or less than about 17:1, or less than about 16:1, or less than about 15:1, or less than about 14:1. These ratios are found to provide a good balance of component binding, bite texture and protein fortification.

### Plant Material

The plant material described herein is distinct from the wheat gluten and/or plant fibre described elsewhere herein.

As described herein, root vegetables may include carrots or squash. Tubers may include potatoes, sweet potatoes, yams, or cassava. Legumes encompass the term pulses, and may include peas, beans, (including soybean and fava bean), chickpea, lentils or nuts. Cereal may include wheat or oats. Oilcrop may include oilseeds such as sunflower or canola. Fungus may include mushroom and mycelium. Marine plants may include algae.

The plant material is selected from textured rice flake, textured tapioca, textured wheat, textured chickpea, textured fava bean, textured soy or textured pea. Textured plant material may be selected because it can more closely mimic the texture of meat or fish. In an embodiment, the textured plant material has a coarse flake. A coarse flake described herein refers to a flake with a size between about 2 and about 20 mm in length (wherein about refers to ± 10%), as determined by visual measurement against a measuring device.

The plant plant material is generally present in the fish analogue at about 50-70 % by weight of the fish analogue (i.e. uncoated fish analogue product), optionally about 60-68 % and in some embodiments is present at about 65 % by weight of the fish analogue. The plant material is present in the fish analogue in an amount greater than 50 % by weight of the fish analogue, or greater than 52 %, or greater than 54%, or greater than 56%, or greater than 58%, or greater than 60%, or greater than 62% by weight of the fish analogue. In some embodiments, the plant material is present in the fish analogue in an amount less than 70%, or less than 68%, or less than 66% by weight of the fish analogue.

In preferred embodiments, the plant material is textured rice flake. Textured rice flake referred to herein refers to a rice product that is in the form of textured individual pieces. The pieces have a varied size and shape distribution. It is preferred that the pieces have a length in the size range 2 - 20 mm (± 10%). Textured rice flake comprises rice, water and optionally an emulsifier. In some embodiments, the emulsifier comprises seaweed extract or alginate. Textured rice flake can be formed by mixing rice starch with water and optionally an emulsifier using a hydrocolloid process, producing flakes of varied piece sizes. In one embodiment the material may then be frozen. In one embodiment the material may undergo a drying process to produce a dehydrated format.

Textured rice flake is distinct from rice flour, rice protein isolate or rice bran. Textured rice flake may be used interchangeably with the term rice flake.

Textured rice flake is well-known in the art and can be obtained from commercial sources, for example, from Meatless (https://www.meatless.nl/). Textured rice flake may be obtained frozen or dehydrated.

Textured rice flake may be selected for the fish analogue of the present invention because it is white or very pale in colour which assists in mimicking the appearance of white fish. The rice flake used in the present invention is as textured individual pieces. The size and shape distribution also assists in mimicking the texture of white fish. The textured rice flake enhances the colour and the texture of the fish analogue. Suitable replacements may include textured wheat, textured chickpea, textured pea or textured tapioca.

Preferably, the textured rice flake has a coarse flake. A coarse flake described herein refers to a flake with have a size between about 2 and about 20 mm in length (wherein about refers to ± 10%), as determined by visual measurement against a measuring device. The function is to provide a flaky texture with a white appearance.

### Further ingredients

The fish analogue comprises a plant-based oil. The plant-based oil may be selected from rapeseed oil, sunflower oil, olive oil or grapeseed oil or a combination thereof. In a preferred embodiment, the plant-based oil is rapeseed oil. Rapeseed oil is light in colour and has a preferential flavour profile to compliment this application. Rapeseed oil also provides a source of omega 3 fatty acids. Other plant-based oils such as flaxseed, chia seed and hempseed oil at a level greater than 5% by weight of the meat or fish analogue can add a nutty flavour note which may not be desirable in this application. In an embodiment of the fish analogue, the plant-based oil may further comprise algae oil.

The fish analogue comprises from about 5 to about 15 % plant-based oil by weight of the fish analogue, or from about 6 to about 13%, or from about 7 to about 12% plant-based oil, or about 7.5% plant-based oil by weight of the fish analogue. The oil addition assists in the creation of a succulent mouth feel. Preferred ranges are selected because higher amounts of oil can result in a greasy coating in the mouth when eating; and lower amounts of oil can have a negative impact on the texture and also the creation of the emulsion during processing. In some embodiments, the fish analogue comprises greater than about 5% plant-based oil by weight of the fish analogue, or greater than about 6% plant-based oil, or greater than about 7% plant-based oil by weight of the fish analogue. In some embodiments, the fish analogue comprises less than 12% plant-based oil by weight of the fish analogue, or less than 11% plant-based oil, or less than 10% plant-based oil, or less than 9% plant-based oil, or less than 8% plant-based oil by weight of the fish analogue. The plant-based oil delivers flavour and may contribute to the succulent texture and good mouth-feel of the fish analogue.

In some embodiments, the fish analogue comprises flavourings. In some embodiments, the flavouring may be powdered flavourings. In preferred embodiments, the flavourings are fish flavourings respectively. In some embodiments, the flavourings include one or more of natural flavouring preparations, sunflower seed oil, sugar and/or maltodextrin (potato and corn), herbs, spices and yeast extract. In some embodiments, the fish analogue comprises up to 5% flavourings, or up to 4% flavourings, or up to 3% flavourings, or up to 2.5% flavourings. In some embodiments, the fish analogue comprises from about 1.5 to about 2.5 % flavourings by weight of the fish analogue or from about 1.75 to about 2.4% flavourings, or about 1.8 to about 2.2% flavourings, or about 1.96% flavourings by weight of the fish analogue. In some embodiments, the fish analogue comprises greater than about 1.5% flavourings by weight of the fish analogue, or greater than about 1.75% flavourings by weight of the fish analogue. In some embodiments, the fish analogue comprises less than 2.5% flavouring by weight of the fish analogue, or less than 2.4% flavourings, or less than 2.3% flavourings, or less than 2.2 % flavourings, or less than 2.1% flavourings, or less than 2% flavourings by weight of the fish analogue.

In some embodiments, the fish analogue comprises salt. Salt described herein may refer to sodium chloride (NaCl). In some embodiments, the fish analogue comprises up to 3% salt by weight of the fish analogue. In some embodiments, the fish analogue comprises from about 1 to about 3 % salt by weight of the fish analogue, or from about 1 to about 1.5 % salt, or about 1.17% salt by weight of the fish analogue. In some embodiments, the fish analogue comprises greater than about 1% salt by weight of the fish analogue, or greater than about 1.15% salt by weight of the fish analogue. In some embodiments, the fish analogue comprises less than 3% salt by weight of the fish analogue, or less than 2.5 % salt, or less than 2% salt, or less than 1.5%, or less than 1.25% salt by weight of the fish analogue. The presence of salt may enhance the flavour of the fish analogue.

In some embodiments, the fish analogue may comprise an additional protein source (i.e. different to wheat gluten), for example, a powdered protein source. The additional protein source may be present in an amount up to about 15% by weight of the fish analogue. In some embodiments, the fish analogue comprises from about 1 to about 15 % additional protein source by weight of the fish analogue.

In some embodiments, the fish analogue, may comprise an omega-3 fatty acid, for example, one or more of docosahexaenoic acid (DHA), eicosapentaenoic acid (EPA) and ALA (alpha-linolenic acid). In some embodiments, the fish analogue comprises at least 0.3g, or at least 0.35g or at least 0.4g or at least 0.45g alpha-linolenic acid per 100g and per 100kcal, or at least 40mg, or at least 45mg, or at least 50mg of the sum of eicosapentaenoic acid and docosahexaenoic acid per 100g and per 100kcal. The inclusion of omega-3 fatty acids can be used to provide nutritional value, and in the case of a fish analogue, can more closely emulate the nutritional benefits obtained from eating white fish. The inclusion of omega-3 fatty acids may not significantly alter the texture and/or appearance of the meat or fish analogue. In some embodiments, the omega-3 fatty acids can be provided by rapeseed oil. In some embodiments, the omega-3 fatty acids can be provided by the presence of algae oil.

In some embodiments, the fish analogue comprises from about 10 to about 25 % water by weight of the fish analogue, or from about 12 to about 20 % water, or about 14% water by weight of the fish analogue. In some embodiments, the fish analogue comprises greater than about 10% water by weight of the fish analogue, or greater than about 11% water, or greater than about 12% water, or greater than about 13% water by weight of the fish analogue. In some embodiments, the fish analogue comprises less than 20% water by weight of the fish analogue, or less than about 19% water, or less than about 18% water, or less than about 17% water, or less than about 16% water, or less than about 15% water by weight of the fish analogue.

### Food Product

The present invention also encompasses a food product comprising the fish described herein. In some embodiments, the food product comprises the fish analogue and a coating, wherein the coating is selected from a coating comprising a batter layer or a coating comprising a crumb layer.

In an embodiment, the food product comprising a fish analogue may be a fish portion analogue, a fish finger analogue, a fishcake analogue or a fish fillet analogue.

In an embodiment, the food product is a chilled food product or a frozen food product, that is, a food product that is suitable for chilling or freezing respectively.

### Properties and Nutritional Content

The fish analogues described herein may have good or improved protein content as compared to other meat or fish analogues, while still advantageously having the texture and appearance of fish. In an embodiment, the protein content is at least about 7.5% by weight of the fish analogue, or at least about 8 %, or at least about 9%, or at least about 10% by weight of the fish analogue.

The fish analogues of the present invention may have good or improved fibre content, while still advantageously having the texture and appearance of fish. In an embodiment, the fibre content is at least about 2% by weight of the fish analogue.

The fish analogues of the present invention have good and balanced nutritional properties, which is particularly important for consumers that have a vegan and/or vegetarian diet.

In an example, the fish analogue has the texture of white fish as determined by sensory evaluation. In an example, the fish analogue has the appearance of white fish, e.g. the same colour as white fish.

### Free of ingredients from an animal origin and/or synthetic cellulose-derived products and/or allergens

The fish analogues of the present invention do not comprise an ingredient from an animal origin. As a result, the products of the present invention may be suitable for consumers with a vegetarian diet.

In an embodiment, the fish analogue of the present invention is plant-based or plant-derived. The products of the present invention may therefore be suitable for consumers with a vegan diet.

In some embodiments, the fish analogue is free of chemically modified or synthetic cellulose-derived products, which are often used as binders in known meat or fish analogues. In some embodiments, the fish analogue is free of microcrystalline cellulose (E460), methyl cellulose (E461), ethyl cellulose (E462), hydroxypropyl cellulose (E463), hydroxylpropyl methyl cellulose (E464), ethyl methyl cellulose (E465), sodium Carboxy Methyl Cellulose (E466), Cross-linked Carboxy Methyl Cellulose (E468), Enzymatically Hydrolysed Carboxy Methyl Cellulose (E469) and Hydroxyethyl Cellulose (E1525). In an embodiment, the meat or fish analogue may be free of modified starches or starch derivatives. Consumers are also increasingly looking at minimising their intake of artificial or chemically modified additives. The fish analogues described herein therefore provide a more natural and label-friendly product while still having good texture and appearance. In some embodiments, the fish analogue is free of E-numbers of artificial additives. A fish analogue free of chemically modified or synthetic cellulose-derived products may also be advantageous because cellulose-derived binders are known to have a laxative effect.

In some embodiments, the fish analogue is free of palm oil. This may provide a healthier fish analogue that is low in saturated fats.

In some embodiments, the fish analogue of the present invention may not comprise fungus-derived protein, such as mycoprotein. The fish analogue of the present invention does not comprise soy protein. In an embodiment, fish analogue of the present invention may not contain nuts. This may be advantageous, for example, for consumers that are allergic to mycoprotein, nuts and/or soy protein. In an example fish analogue described herein, the fish analogue is free of mycoprotein, nuts and soy protein. Products containing plant proteins other than soy protein may also be more sustainable and environmentally friendly, due to the link between farming of soy protein and deforestation.

### Method

The present invention also provides a method for producing a fish analogue described herein, the method comprising:
providing the wheat gluten and the plant fibre and mixing until evenly distributed, and
combining plant material with the wheat gluten and the plant fibre and mixing.

The present invention also provides for a fish analogue prepared by the above-mentioned method. Evenly distributed referred to herein refers to said components being mixed until homogenous.

The wheat gluten and plant fibre are added to a pre-blend mixture comprising plant-based oil, water, flavourings and/or salt. In some embodiments, the wheat gluten and plant fibre are mixed with the pre-blend until an emulsion is formed. In some embodiments, the plant material is added in frozen from to the pre-blend mixture or emulsion. In an example, when certain textured plant materials, such as textured rice flake is used, the pre-blending of the pre-blend mixture with wheat gluten and plant fibre, before adding the textured rice flake, is found to produce a fish analogue with an improved texture and lighter material, as compared to without a pre-blending step. In some embodiments, the mixing of the pre-blend is performed at medium shear. The mixing of the pre-blend can be performed for at least about 20 - 50 seconds, at least about 25 - 40 seconds, for example, about 30 seconds.

In some embodiments, the plant material is first hydrated with water (i.e. mixed with water), before being combined with the wheat gluten and plant fibre. In some embodiments, the plant material is combined with one or more of water, plant-based oil, flavourings and/or salt before being combined with the wheat gluten and plant fibre.

The mixing of components is preferably carried out using a bowl chopper. The bowl chopper consists of a rotating bowl with a series of rotating knives running in a vertical plane in the trough of the bowl. The knife head speed can be varied, as can the rotation speed of the bowl. They offer the advantage over other systems that the mixing and comminution step can be accomplished in one operation. In some embodiments, the mixing of the wheat gluten and plant fibre, and the wheat gluten, plant fibre and plant material are performed at low shear. In some embodiments, the mixing of the wheat gluten and plant fibre, and the wheat gluten, plant fibre and plant material is performed for at least about 20 - 50 seconds or at least about 25 - 40 seconds, for example, about 30 seconds.

In some embodiments, the combining of the wheat gluten and plant fibre and plant material is performed at any suitable temperature. In some embodiments, the combining of the wheat gluten, plant fibre and plant material takes place at a temperature from -10 to 10 ° C, and more preferably at a temperature of -2 to 3 ° C, preferably wherein the plant material is added to a wheat gluten and plant fibre emulsion. In some embodiments, the combining of the wheat gluten and plant fibre and plant material is performed at a temperature less than 10 °C, or less than 9 °C, or less than 8 °C, or less than 7 °C, or less than 6 °C, or less than 5 °C, or less than 4 °C, or less than 3 °C, or less than 2 °C. A low temperature may be important for preventing moisture release from certain plant materials, for example textured rice flake, which may be added in frozen form. Moisture release may cause the textured plant material to soften, increasing the likelihood of the material to be broken down during the manufacturing process which would be disadvantageous to the final product. Lower temperatures also are preferable for microbiological control.

In some embodiments, after combining the wheat gluten and plant fibre with the plant material, the fish analogue mixture is formed into a fish analogue unit, for example, by cutting. In some examples, the fish analogue is cut into finger planks or rectangles. The fish analogue unit, finger planks or rectangles may resemble fish fingers.

In some embodiments, the fish analogue unit is chilled or frozen, or is suitable for chilling or being frozen.

In some embodiments, the fish analogue unit is coated. In some embodiments, the fish analogue may be coated with a batter layer or a crumb layer, for example, using a batter or crumb mixture. In some embodiments, the fish analogue unit is coated twice with the batter or crumb mixture.

In some embodiments, after coating, the coated fish analogue unit is fried. In some embodiments, the coated fish analogue is fried at a temperature from about 180 °C to about 210 °C, for example, about 195 °C. The frying step may be performed for about 30 seconds to about 55 seconds, optionally about 45 seconds.

In some embodiments, after frying, the coated fish analogue unit is chilled or frozen, or is suitable for chilling or being frozen.

In an embodiment, the method for producing a fish analogue comprises:
(a) mixing together plant-based oil, flavourings and water until evenly distributed,
(b) adding wheat gluten and plant fibre and mixing until evenly distributed and an emulsion formed,
(c) adding a textured plant material, optionally textured rice flake, and mixing,
wherein the fish analogue comprises from about 50% to about 70% by weight textured plant material, optionally textured rice flake.

### Use

The present invention also provides the use of wheat gluten and plant fibre to bind plant material in fish analogue according to the appended claims, wherein the plant fibre has a fibre length between about

80 microns to about 500 microns, and wherein the meat or fish analogue comprises from about 7% to about 20% by weight of the wheat gluten and from about 0.25 % to about 7.5% plant fibre. As described herein, the use of wheat fibre and a plant fibre having a fibre length between about 80 microns to about 500 microns can be used to cohesively bind plant material and optionally other components of the fish analogue together. The use of wheat fibre and plant fibre does not have a detrimental effect on texture, with the fish analogues closely resembling fish.

Also described herein is the use of wheat gluten to increase the protein content in a fish analogue, wherein the fish analogue comprises from about 7% to about 20% by weight of the wheat gluten and from about 0.25 % to about 7.5% plant fibre and wherein the plant fibre has a fibre length between about 80 microns to about 500 microns, wherein the protein content is at least about 7.5% by weight of the fish analogue.

### Preferred Compositions

In an embodiment, the fish analogue comprises:
from about 50 to about 70 %, or from about 60 to about 68% plant material, optionally textured rice flake
from about 7 to about 20 % wheat gluten, or from 9 to about 15% wheat gluten,
from about 10 to about 25% water
from about 5 to about 15% plant-based oil, or from about 7 to about 12% plant-based oil, optionally rapeseed oil
from about 0.25 to about 5% plant fibre, or from about 0.5 to about 1.25% plant fibre with a fibre length from about 80 microns to about 500 microns, optionally wheat fibre up to about 2.5 % flavourings, or from about 1.75 to about 2.4 % flavourings,
up to about 3% salt, or from about 1 to about 1.5% salt,
wherein % are by weight of the fish analogue.

### Examples

### Example 1 - Preparing a fish analogue (lab scale)

### Equipment

Kenwood mixer (standard kitchen model), Scales, Spatula

### Ingredients table

| **INGREDIENT** | **PERCENTAGE** | **QUANTITY (IN KG)** |
|---|---|---|
| Textured Rice flake (coarse) | 64.99 | 0.650 |
| Water | 13.78 | 0.138 |
| Rapeseed oil | 7.48 | 0.075 |
| Salt | 1.18 | 0.012 |
| Wheat Gluten | 9.85 | 0.098 |
| Wheat Fibre | 0.75 | 0.007 |
| Flavour powder | 1.97 | 0.020 |
| **TOTAL** | **100** | **1.0kg** |

| | | |
|---|---|---|
| 1. Remove the rice flake from the freezer to temper whilst preparing the mix 2. Pre-blend in the mixer the flavour powder and the salt together on medium shear to evenly distribute the flavour powder 3. Into the mixer add all the rapeseed oil and water on low shear for approx. 30 seconds until fully combined 4. Add all the wheat gluten and wheat fibre to the mixer. Mix on low shear for 30 seconds to form the emulsion. If needed, a spatula may be used to scrape any mixture of the sides of the bowl back into the mix 5. Add the textured rice flake into the emulsion and mix on low shear for approx. 30 seconds until fully combined. 6. Check the temperature of the mixture, this should be roughly -1°C ± a few degrees | | |

The core mixture was cut to size, coated, and fried at a temperature of 195 °C. The final products are suitable for chilling or for freezing.

### Testing

It was found that the wheat gluten and wheat fibre could be used to bind the components of the fish analogue and the plant material (i.e., textured rice flake) together, to form a fish analogue with a cohesive texture.

The fish analogue was also found to have a texture resembling fish, as determined by sensory evaluation. Notably, the fish analogues also demonstrated a white colour and good appearance. This is demonstrated by a fish product comprising a fish analogue in accordance with the present invention, which is shown in Figure 1.

### Rice Flake Size Distribution

The size distribution of the textured rice flake was investigated to see which size distribution demonstrated the best properties. A fish analogue according to Example 1 comprising 100% coarse textured rice flake was compared with two example fish analogues comprising either i) 50% coarse and 50% fine textured rice flake and ii) 75% coarse and 25% fine textured rice flake respectively. Fine textured rice flake, described herein, refers to a rice flake that has a smaller rice flake size and size distribution compared to coarse textured rice flake.

It was found that fish analogues comprising larger rice flakes had both a better textural profile and a flakier appearance, with the fish analogue comprising 100% coarse flake demonstrating the best properties.

### Comparative Examples

A comparative product similar to Example 1 was prepared, wherein the 9.85% wheat gluten was replaced with 9% pea protein isolate. The resultant product did not demonstrate the same properties as the product formed using wheat gluten. The texture of the comparative example was powdery and chalky. In addition, the fish analogue core was beige in colour and too dark to resemble white fish.

In a second comparative example, a combination of wheat gluten and methylcellulose (E461) was prepared, with the amount of methylcellulose ranging from 0.5 to 1.0% by weight of the fish analogue. The presence of methylcellulose was found to have a negative impact on texture, as well as processing, with the resultant product being too sticky and lacking good "bite".

In addition, other materials such as rice protein isolate were trialled to bind the materials and also provide a source of protein nutrition claim. The results observed in the finished products matched those as seen when using pea protein isolate, having a negative impact on texture and colour.

### Commercial Award

Since the priority date of this application, a product according to the invention "BirdsEye *Green Cuisine* Fishless Fingers" won a "Top Launch" award as part of the Top Products Survey 2021 by the publication "The Grocer". This reflects the long-felt want of good alternative meat or fish analogue products, and is indicative of the commercial success of products of the invention.

## Claims

1. A fish analogue comprising
greater than 50% by weight plant material, wherein the plant material is selected from textured rice flake, textured wheat, textured chickpea, textured pea and/or textured tapioca 7% to 20% by weight wheat gluten;
from 0.25 % to 7.5% by weight plant fibre, and wherein the plant fibre has a fibre length between about 80 microns to about 500 microns;
from 5 to 15% by weight of a plant-based oil; wherein the fish analogue does not comprise an ingredient from an animal origin and is free of soy protein, and wherein the plant fibre is a cereal or bamboo fibre.

2. The fish analogue according to any preceding claim, wherein the plant fibre is a cereal fibre and wherein the cereal fibre is wheat fibre or oat fibre, and preferably a wheat fibre.

3. The fish analogue according to any preceding claim, wherein the plant fibre comprises at least about 96 % insoluble fibres by weight of the plant fibre.

4. The fish analogue according to any preceding claim, wherein the fish analogue comprises from greater than 50 % to 70 % by weight plant material.

5. The fish analogue according to any preceding claim, wherein the plant fibre has a fibre length between about 150 microns to about 250 microns.

6. The fish analogue according to any preceding claim, wherein the plant-material is textured rice flake.

7. The fish analogue according to any preceding claim, wherein the protein content is at least 7.5% by weight of the fish analogue, optionally at least 10% by weight of the fish analogue.

8. The fish analogue according to any preceding claim, wherein the wheat gluten is from about 9% to about 15% by weight of the fish analogue.

9. The fish analogue according to any preceding claim, wherein the plant fibre is from about 0.5% to about 1.25% by weight of the fish analogue.

10. The fish analogue according to any preceding claim, wherein the ratio of wheat gluten to plant fibre is from about 1:1 to about 30:1, or optionally from about 10:1 to about 15:1.

11. The fish analogue according to any preceding claim, comprising greater than 50 to about 70 %
plant material, wherein the plant material is selected from textured rice flake, textured wheat, textured chickpea, textured pea and/or textured tapioca,
from 7 to 20 % wheat gluten,
from 10 to 25% water
from 5 to 15% plant-based oil,
from 0.25 to 5% plant fibre, with a fibre length from about 80 microns to about 500 microns, up to about 2.5 % flavourings, and
up to about 3% salt,
wherein % are by weight of the fish analogue.

12. The fish analogue according to any preceding claim, wherein the fish analogue is free of microcrystalline cellulose (E460), methyl cellulose (E461), ethyl cellulose (E462), hydroxypropyl cellulose (E463), hydroxylpropyl methyl cellulose (E464), ethyl methyl cellulose (E465), sodium Carboxy Methyl Cellulose (E466), Cross-linked Carboxy Methyl Cellulose (E468), Enzymatically Hydrolysed Carboxy Methyl Cellulose (E469) and Hydroxyethyl Cellulose (E1525).

13. A method of producing a fish analogue according to any preceding claim, the method comprising:
providing the wheat gluten and the plant fibre and mixing until evenly distributed, wherein the wheat gluten and plant fibre are added to a pre-blend mixture comprising plant-based oil, water, flavourings and/or salt, and
combining plant material with the wheat gluten and plant fibre and mixing.

14. Use of wheat gluten and plant fibre to bind plant material in a fish analogue, wherein the plant fibre has a fibre length between about 80 microns to about 500 microns, and wherein the fish analogue comprises from about 7% to about 20% by weight of the wheat gluten and from about 0.25 % to about 7.5% plant fibre, and wherein the plant fibre is a cereal or bamboo fibre, and wherein the fish analogue comprises from 5 to 15 % by weight of a plant-based oil and greater than 50% by weight of plant material, wherein the plant material is selected from textured rice flake, textured wheat, textured chickpea, textured pea and/or textured tapioca, and wherein the fish analogue does not comprise an ingredient from an animal origin and is free of soy protein

## Patentansprüche

1. Fischanalog, umfassend
mehr als 50 Gew.-% Pflanzenmaterial, wobei das Pflanzenmaterial ausgewählt ist aus texturierten Reisflocken, texturiertem Weizen, texturierter Kichererbse, texturierter Erbse und/oder texturiertem Tapioka mit 7 bis 20 Gew.-% Weizengluten;
0,25 bis 7,5 Gew.-% Pflanzenfasern, und wobei die Pflanzenfasern eine Faserlänge zwischen etwa 80 Mikron und etwa 500 Mikron aufweisen;
5 bis 15 Gew.-% eines Öls auf pflanzlicher Basis; wobei das Fischanalog keine Zutat tierischen Ursprungs enthält und frei von Sojaprotein ist und wobei die Pflanzenfaser eine Getreide- oder Bambusfaser ist.

2. Fischanalog nach einem der vorhergehenden Ansprüche, wobei die Pflanzenfaser eine Getreidefaser ist und wobei die Getreidefaser eine Weizenfaser oder Haferfaser und vorzugsweise eine Weizenfaser ist.

3. Fischanalog nach einem der vorhergehenden Ansprüche, wobei die Pflanzenfaser mindestens etwa 96 % unlösliche Fasern, bezogen auf das Gewicht der Pflanzenfaser, umfasst.

4. Fischanalog nach einem der vorhergehenden Ansprüche, wobei das Fischanalog mehr als 50 bis 70 Gew.-% Pflanzenmaterial umfasst.

5. Fischanalog nach einem der vorhergehenden Ansprüche, wobei die Pflanzenfaser eine Faserlänge zwischen etwa 150 Mikron und etwa 250 Mikron aufweist.

6. Fischanalog nach einem der vorhergehenden Ansprüche, wobei das Pflanzenmaterial eine texturierte Reisflocke ist.

7. Fischanalog nach einem der vorhergehenden Ansprüche, wobei der Proteingehalt mindestens 7,5 Gew.-% des Fischanalogs, optional mindestens 10 Gew.-% des Fischanalogs, beträgt.

8. Fischanalog nach einem der vorhergehenden Ansprüche, wobei das Weizengluten etwa 9 bis etwa 15 Gew.-% des Fischanalogs ausmacht.

9. Fischanalog nach einem der vorhergehenden Ansprüche, wobei das Weizengluten etwa 0,5 bis etwa 1,25 Gew.-% des Fischanalogs ausmacht.

10. Fischanalog nach einem der vorhergehenden Ansprüche, wobei das Verhältnis von Weizengluten zu Pflanzenfasern von etwa 1:1 bis etwa 30:1 oder optional von etwa 10:1 bis etwa 15:1 beträgt.

11. Fischanalog nach einem der vorhergehenden Ansprüche, umfassend mehr als 50 bis etwa 70 % Pflanzenmaterial, wobei das Pflanzenmaterial ausgewählt ist aus texturierten Reisflocken, texturiertem Weizen, texturierter Kichererbse, texturierter Erbse und/oder texturiertem Tapioka,
von 7 bis 20 % Weizengluten,
von 10 bis 25 % Wasser
von 5 bis 15 % Öl auf pflanzlicher Basis,
von 0,25 bis 5 % Pflanzenfasern mit einer Faserlänge von etwa 80 Mikron bis etwa 500 Mikron,
bis zu etwa 2,5 % Aromastoffe, und
bis zu etwa 3 % Salz,
wobei sich die Prozentangaben auf das Gewicht des Fischanalogs beziehen.

12. Fischanalog nach einem der vorhergehenden Ansprüche, wobei das Fischanalog frei ist von mikrokristalliner Cellulose (E460), Methylcellulose (E461), Ethylcellulose (E462), Hydroxypropylcellulose (E463), Hydroxylpropylmethylcellulose (E464), Ethylmethylcellulose (E465), Natriumcarboxymethylcellulose (E466), vernetzter Carboxymethylcellulose (E468), enzymatisch hydrolysierter Carboxymethylcellulose (E469) und Hydroxyethylcellulose (E1525).

13. Verfahren zum Herstellen eines Fischanalogs nach einem der vorhergehenden Ansprüche, wobei das Verfahren umfasst:
Bereitstellen des Weizenglutens und der Pflanzenfasern und Mischen, bis sie gleichmäßig verteilt sind, wobei das Weizengluten und die Pflanzenfasern zu einer Vormischung hinzugefügt werden, die Öl auf Pflanzenbasis, Wasser, Aromastoffe und/oder Salz enthält, und
Pflanzenmaterial mit Weizengluten und Pflanzenfasern verbinden und mischen.

14. Verwendung von Weizengluten und Pflanzenfaser zur Bindung von Pflanzenmaterial in einem Fischanalog, wobei die Pflanzenfaser eine Faserlänge zwischen etwa 80 Mikron und etwa 500 Mikron aufweist und
wobei das Fischanalog etwa 7 % bis etwa 20 % Weizengluten und etwa 0,25 % bis etwa 7,5 % Pflanzenfaser bezogen auf das Gewicht umfasst, wobei die Pflanzenfaser eine Getreide- oder Bambusfaser ist, und wobei das Fischanalog 5 % bis 15 % eines pflanzenbasierten Öls und mehr als 50 % Pflanzenmaterial bezogen auf das Gewicht umfasst, wobei das Pflanzenmaterial ausgewählt ist aus texturierten Reisflocken, texturiertem Weizen, texturierten Kichererbsen, texturierten Erbsen und/oder texturierter Tapioka, und wobei das Fischanalog keine Zutat tierischen Ursprungs umfasst und frei von Sojaprotein ist.

## Revendications

1. Succédané de poisson comprenant
plus de 50 % en poids de matière végétale, dans lequel la matière végétale est choisie parmi des flocons de riz texturés, du blé texturé, du pois chiche texturé, du pois texturé et/ou du tapioca texturé, de 7 % à 20 % en poids de gluten de blé ;
de 0,25 % à 7,5 % en poids de fibre végétale, et dans lequel la fibre végétale a une longueur de fibre comprise entre environ 80 microns et environ 500 microns ;
de 5 % à 15 % en poids d'une huile végétale ; dans lequel le succédané de poisson ne comprend pas d'ingrédient d'origine animale et est exempt de protéines de soja, et dans lequel la fibre végétale est une fibre de céréale ou de bambou.

2. Succédané de poisson selon l'une quelconque revendication précédente, dans lequel la fibre végétale est une fibre de céréale et dans lequel la fibre de céréale est une fibre de blé ou une fibre d'avoine, et de préférence une fibre de blé.

3. Succédané de poisson selon l'une quelconque revendication précédente, dans lequel la fibre végétale comprend au moins environ 96 % de fibres insolubles en poids de la fibre végétale.

4. Succédané de poisson selon l'une quelconque revendication précédente, dans lequel le succédané de poisson comprend de plus de 50 % à 70 % en poids de matière végétale.

5. Succédané de poisson selon l'une quelconque revendication précédente, dans lequel la fibre végétale a une longueur de fibre comprise entre environ 150 microns et environ 250 microns.

6. Succédané de poisson selon l'une quelconque revendication précédente, dans lequel la matière végétale est un flocon de riz texturé.

7. Succédané de poisson selon l'une quelconque revendication précédente, dans lequel la teneur en protéines est d'au moins 7,5 % en poids du succédané de poisson, éventuellement d'au moins 10 % en poids du succédané de poisson.

8. Succédané de poisson selon l'une quelconque revendication précédente, dans lequel le gluten de blé représente environ 9 % à environ 15 % en poids du succédané de poisson.

9. Succédané de poisson selon l'une quelconque revendication précédente, dans lequel la fibre végétale représente environ 0,5 % à environ 1,25 % en poids du succédané de poisson.

10. Succédané de poisson selon l'une quelconque revendication précédente, dans lequel le rapport entre le gluten de blé et la fibre végétale est d'environ 1:1 à environ 30:1, ou éventuellement d'environ 10:1 à environ 15:1.

11. Succédané de poisson selon l'une quelconque revendication précédente, comprenant plus de 50 % à environ 70 % de matière végétale, dans lequel la matière végétale est choisie parmi des flocons de riz texturés, du blé texturé, du pois chiche texturé, du pois texturé et/ou du tapioca texturé,
de 7 % à 20 % de gluten de blé,
de 10 % à 25 % d'eau
de 5 % à 15 % d'huile végétale,
de 0,25 % à 5 % de fibre végétale, avec une longueur de fibre d'environ 80 microns à environ 500 microns,
jusqu'à environ 2,5 % d'arômes, et
jusqu'à environ 3 % de sel,
dans lequel les % sont en poids du succédané de poisson.

12. Succédané de poisson selon l'une quelconque revendication précédente, dans lequel le succédané de poisson est exempt de cellulose microcristalline (E460), de méthylcellulose (E461), d'éthylcellulose (E462), d'hydroxypropylcellulose (E463), d'hydroxypropylméthylcellulose (E464), d'éthylméthylcellulose (E465), de carboxyméthylcellulose sodique (E466), de carboxyméthylcellulose réticulée (E468), de carboxyméthylcellulose hydrolysée enzymatiquement (E469) et d'hydroxyéthylcellulose (E1525).

13. Procédé de production d'un succédané de poisson selon l'une quelconque revendication précédente, le procédé comprenant :
la fourniture du gluten de blé et de la fibre végétale et le mélange jusqu'à ce qu'ils soient uniformément répartis, dans lequel le gluten de blé et la fibre végétale sont ajoutés à un mélange pré-mélangé comprenant de l'huile végétale, de l'eau, des arômes et/ou du sel, et
la combinaison de la matière végétale avec le gluten de blé et la fibre végétale et le mélange.

14. Utilisation de gluten de blé et de fibre végétale pour lier la matière végétale dans un succédané de poisson, dans lequel la fibre végétale a une longueur de fibre comprise entre environ 80 microns et environ 500 microns, et
dans lequel le succédané de poisson comprend d'environ 7 % à environ 20 % en poids du gluten de blé et d'environ 0,25 % à environ 7,5 % de fibre végétale, et dans lequel la fibre végétale est une fibre de céréale ou de bambou, et dans lequel le succédané de poisson comprend de 5 % à 15 % en poids d'une huile végétale et plus de 50 % en poids de matière végétale, dans lequel la matière végétale est choisie parmi des flocons de riz texturés, du blé texturé, du pois chiche texturé, du pois texturé et/ou du tapioca texturé, et dans lequel le succédané de poisson ne comprend pas d'ingrédient d'origine animale et est exempt de protéines de soja
